# EUROPÄISCHE PATENTSCHRIFT

(11) **EP 0 604 645 B1**
(45) Veröffentlichungstag und Bekanntmachung des Hinweises auf die Patenterteilung: **13.11.1996**
(21) Anmeldenummer: 93917592.3
(22) Anmeldetag: 17.07.1993
(51) Int. Cl.: G01D 5/26

(54) **FASEROPTISCHER SENSOR NACH DEM FABRY-PEROT-PRINZIP**
FIBRE-OPTIC SENSOR BASED ON THE FABRY-PEROT PRINCIPLE
CAPTEUR A FIBRE OPTIQUE FONCTIONNANT SELON LE PRINCIPE DE FABRY-PEROT

(30) Priorität: 17.07.1992 DE 4223625
(43) Veröffentlichungstag der Anmeldung: 06.07.1994
(73) Patentinhaber: INSTITUT FÜR PHYSIKALISCHE HOCHTECHNOLOGIE E.V., D-07743 Jena (DE)
(72) Erfinder: SCHWOTZER, Günter, D-07747 Jena (DE)
(74) Vertreter: Pfeiffer, Rolf-Gerd
(86) Internationale Anmeldenummer: EP9301896
(87) Internationale Veröffentlichungsnummer: WO9402810

(56) Entgegenhaltungen:
- EP-A- 0 250 354
- WO-A-91/19965
- DE-C- 3 929 453
- US-A- 4 755 668
- US-A- 4 861 136
- US-A- 5 202 939
- APPLIED OPTICS, Bd. 31, Nr. 4, 1. Februar 1992, New York US, Seiten 431-433, XP246829; K.A. MURPHY et al.: 'Fabry-Perot fiber-optic sensors in full-scale fatigue testing on an F-15 aircraft'
- OPTICS LETTERS, Bd. 16, Nr. 4, 15. Februar 1991, New York US, Seiten 273-275, XP176147; K.A. MURPHY et al.: 'Quadrature phase-shifted, extrinsic Fabry-Perot optical fibre sensors'
- OPTICAL ENGINEERING, Bd. 31, Nr. 1, Januar 1992, Seiten 13-21, XP246843; J.J. LESKO et al.: 'Embedded Fabry-Perot fiber optic strain sensors in the macromodel composites'
- OPTICS LETTERS, Bd. 18, Nr. 1, 1. Januar 1993, New York US, Seiten 78-80, XP328284; C. BELLEVILLE et al.: 'White-light interferometric multimode fibre-optic strain sensor'

## Beschreibung

Die Erfindung betrifft einen faseroptischen Sensor gemäß der Gattung des ersten Patentanspruchs. Derartige Sensoren werden insbesondere zu hochempfindlichen Messungen kleiner Verschiebungen benutzt, die durch Dehnungen, Verformungen, Drücke, Temperaturänderungen von Gasen, Flüssigkeiten oder festen Stoffen zustande kommen. In gleicher Weise sind Brechzahl-, Absorptions- und Konzentrationsänderungen ermittelbar.

Die Verwendung von faseroptischen Sensoren bietet sich besonders in elektromagnetisch gestörten oder explosionsgefährdeten Umgebungen an. Mit den dabei zur Anwendung kommenden faseroptischen interferometrischen Meßverfahren werden sehr hohe Empfindlichkeiten erzielt. Zur Messung kleiner Verschiebungen bei kleinen Abständen sind faseroptische Fabry-Perot-Interferometer-Anordnungen bekannt. So werden faseroptische Fabry-Perot-Sensoren für Temperaturmessungen /1,2/ und für Druckmessungen /3/ benutzt. Der Fabry-Perot-Resonator besteht dabei in allen Fällen aus zwei das Licht reflektierenden Flächen, die einen Spalt veränderlicher Breite begrenzen und die am Ende einer oder zweier Lichtfasern angeordnet sind. Für Druckmessungen wird gemäß /3/ die eine reflektierende Fläche als Membran gestaltet, die sich bei Druckänderungen verbiegt und die Spaltbreite verändert. Bei Temperaturmessungen befindet sich zwischen den reflektierenden Flächen ein sich thermisch ausdehnender lichtdurchlässiger fester Stoff /2/. Bei einer weiterhin bekannten Anwendung wird eine reflektierende Fläche durch die thermische Ausdehnung eines kreisförmig um dieselbe befestigten flachen Körpers gegen die andere reflektierende Fläche verschoben /1/. Bei Spaltbreitenänderungen eines Fabry-Perot-Resonators ändern sich in zusätzlicher Abhängigkeit der Wellenlänge des verwendeten Meßlichts die Transmission und die Reflexion des Resonators. Entscheidenden Einfluß auf die Meßempfindlichkeit übt die Steilheit aus, mit der sich die Lichtintensität bzw. der Kontrast ändert. Bei empfindlichen Messungen der Spaltbreitenänderungen muß dafür gesorgt werden, daß die reflektierenden Flächen zueinander parallel sind und daß das Licht innerhalb des Resonators keine oder nur eine geringe Divergenz besitzt. Ersteres stellt an die Präzision der Herstellung der thermischen Dehnungskörper und Membranen und besonders an deren Befestigung an die Faserenden hohe Anforderungen. Der Forderung nach geringer Divergenz des Lichts wird durch zusätzliches Einfügen von kollimierenden optischen Elementen, z.B. GRIN-Linsen, zwischen Faserenden und Resonator entsprochen. Diese den Stand der Technik betreffenden Maßnahmen erschweren die Herstellung faseroptischer Sensoren nach dem Fabry-Perot-Prinzip und erhöhen die Kosten für eine derartige Anordnung.

Es ist auch schon ein die Endflächen zwangsweise parallelisierender faseroptischer Sensor bekannt, der nach dem Fabry-Perot-Prinzip arbeitet /4/ und der in einer fassenden Kapillare von einer Kapillarenöffnung her eine Einmodenfaser und von der anderen Kapillarenöffnung her eine Mehrmodenfaser als Reflektor enthält. Die Endflächen beider Fasern sind parallel zueinander und begrenzen den Meßraum. Die Fasern sind über ihre ganze Länge in der Kapillare mit dieser verbunden. Die

Nachteile dieser Anordnung sind darin zu sehen, daß mindestens eine relativ kostspielig und aufwendig handhabbare Monomodefaser erforderlich ist und daß die Fasern über ihre gesamte Länge in die Kapillare eingeklebt bzw. mit der Kapillare verbunden sind.

Die Druckschrift Optical Engineering Bd. 31, Nr. 1, Januar 1992, Seiten 13-22 XP246843, J.J. Lesko et al.:"Embedded Fabry-Perot fibre optic strain sensors in the macromodel composites" offenbart ebenfalls einen Fabry-Perot Sensor, der in einer fassenden Kapillare von einer Kapillaröffnung her eine Einmodenfaser und von der anderen Kapillaröffnung her eine Mehrmodenfaser als Reflektor enthält. Hier ist das entfernte Ende der Mehrmodenfaser mit der Kapillare verschmolzen, während die Einmodenfaser mit der Kapillare an derem anderen Ende verklebt ist. Zudem ist aus diesem Dokument bekannt, daß die numerische Apertur von optischen Fasern durch die Brechungsindizes der Hülle und des Kernes der Faser bestimmt wird. Allerdings weist auch diese Vorrichtung die im Zusammenhang mit Einmodenfasern beschriebenen Nachteile auf.

Der Erfindung liegt die Aufgabe zugrunde, einen faseroptischen Sensor nach dem Fabry-Perot-Prinzip zu schaffen, der nicht an die aufwendig handhabbaren, lichtschwachen Monomodefasern gebunden ist. Durch einfache Variation der Mittel ist der Sensor in vielfältiger Weise an Meßaufgaben anpaßbar, bei denen kleine Verschiebungen der Fabry-Perot-Flächen bzw. Veränderungen der optischen Weglängen zu messen sind oder bei denen zu bestimmende physikalische Einflußgrößen in kleine zu messende Verschiebungen umwandelbar sind.

Gemäß der Erfindung wird diese Aufgabe durch das Kennzeichen des ersten Patentanspruchs gelöst. Die Verwendung mindestens einer Multimodefaser erleichtert ihre Handhabbarkeit ebenso, wie sie die Lichtführung verbessert. Die Anwendung einer numerischen Apertur, die kleiner als 0,2 ist, vorzugsweise nicht über 0,1 liegt, gewährleistet, daß die nach dem Durchlaufen des Abstands zwischen den zueinander parallelen Reflexions- oder Endflächen sich überlagernden Strahlen hinreichend interferenzfähig sind. Die Wahl der Brechzahlen von Faserkern und Fasermantel bestimmt die numerische Apertur. Bei Verwendung einer Lichtleitfaser, z.B. mit Quarzglaskern, soll die relative Brechzahldifferenz Δ=(n_{K}-n_{M})/n_{K}≤2,4 · 10⁻³ betragen, wobei n_{K} die Brechzahl des Faserkerns und n_{M} die Brechzahl des Fasermantels bedeuten. Die Multimode-Lichtleitfaser wird durch Brechen oder durch Brechen und Polieren mit einer zu ihrer Längsachse rechtwinkligen Endfläche versehen und in die Kapillare eingeführt. Dabei ist der innere Durchmesser der Kapillare an den äußeren Durchmesser der Faser angepaßt, so daß die Faserendfläche zwangsweise rechtwinklig zur Achse von Kapillare und Faser ausgerichtet ist.

Ist die Kapillare beidseitig offen und von jeder Seite eine optische Faser in sie eingeführt, so ist je nach der zu lösenden Meßaufgabe entweder eine der optischen Fasern mit der Kapillare an einer definierten Stelle oder aber es sind beide optische Fasern an definierten Stellen mit der Kapillare fest verbunden. In jedem Fall befinden sich die Endflächen der beiden optischen Fasern in einem Abstand von größenordnungsmäßig 1 bis zu einigen 10 µm, so daß ein planparalleler Spalt entsteht, in dem die wenig divergierenden Lichtstrahlen mehrfach reflektiert und zur Interferenz gebracht werden. Um mindestens zwei Meßgrößen gleichzeitig bestimmen zu können, kann zwischen den Endflächen der beiden optischen Fasern mindestens ein weiteres optisches Faserstück angeordnet sein, dessen Endflächen mit den Endflächen der optischen Fasern planparallele zur gemeinsamen Faserachse rechtwinklig gebildete Spalte bilden. Auf diese Weise kann z.B. eine Dehnungsmessung mit einer Temperaturmessung kombiniert werden. Auch für das Faserstück ist es von Vorteil, wenn es nicht über seine gesamte Länge, sondern nur an einer definierten Stelle mit der Kapillare in Verbindung steht.

Empfehlenswert ist es, die Kapillare an der gleichen definierten Stelle mit einem Meßobjekt fest zu verbinden, an der die eine optische Faser mit der Kapillare fest verbunden ist. Die andere optische Faser kann in der Kapillare gleitend gelagert und mit dem Meßobjekt selbst fest verbunden sein. Ist die Kapillare an mehreren definierten Stellen mit dem Meßobjekt verbunden, so befinden sich diese in der Nachbarschaft der Verbindungsstellen der optischen Fasern mit der Kapillare. Ist in der Kapillare zwischen den Endflächen der optischen Fasern ein Faserstück vorgesehen, so kann die Kapillare an den gleichen definierten Stellen mit dem Meßobjekt in Verbindung stehen, an denen die eine der optischen Fasern und das Faserstück mit der Kapillare fest verbunden sind.

Für die Durchführung von Druckmessungen ist es von Vorteil, die Kapillare an einem Ende mit einer Aufweitung zu versehen und diese Aufweitung durch eine Membran zu verschließen. An der Membran ist dann mit einem Ende ein Faserstück befestigt, das in der Kapillare gleitend gelagert ist und das mit seiner entgegengesetzt liegenden Endfläche mit der Endfläche einer optischen Faser zusammenwirkt, die ebenfalls in die Kapillare hineinragt und mit der Kapillare fest verbunden ist. Zwischen den einander zugekehrten Endflächen der Faser und des Faserstücks wird so ein planparalleler Spalt gebildet, dessen Größe sich in Abhängigkeit von dem auf die Membran wirkenden Druck ändert. Eine andere zu Druckmessungen geeignete vorteilhafte Ausführungsform des erfindungsgemäßen faseroptischen Sensors ergibt sich, wenn die Kapillare quer zur Faserachse geteilt ist, beide Kapillarteile durch eine Ringmembran miteinander verbunden sind, wenn die eine der beiden optischen Fasern an einer definierten Stelle am äußeren Ende des einen Kapillarteils befestigt ist und die andere der beiden optischen Fasern an einer definierten Stelle des anderen Kapillarteils befestigt ist und durch die Ringmembran in den einen Kapillarteil hineinragt. Druckänderungen im Bereich der Ringmembran verändern die Lage der beiden Kapillarteile und damit der beiden einander zugekehrten Enden der optischen Fasern zueinander. Damit ergibt sich eine Veränderung der Spaltbreite sowie eine Veränderung des Interferenzbildes, die dieser Spaltbreitenänderung zugeordnet ist.

Zur Durchführung von Temperaturmessungen kann der Spalt zwischen den Endflächen der optischen Fasern in der Kapillare vorteilhaft mit einer Immersion gefüllt sein, deren Brechzahl oder Absorption sich in Abhängigkeit von der Temperatur ändert. Vorteilhafterweise werden hierfür z.B. Flüssigkeiten oder Polymere verwendet, deren Brechzahl sich mit der Temperatur stark ändert (Δn/ΔT≥ 10⁻⁴/C°).

Damit sich die thermisch bedingten Längenänderungen der optischen Fasern und der Kapillare nicht auf das Messungsergebnis auswirken, ist es von Vorteil, beide aus demselben Material, vorzugsweise aus Quarzglas herzustellen.

Die Fasern einerseits und die Kapillare andererseits können auch aus unterschiedlichen Materialien bestehen. Betrifft der Unterschied der Materialien die thermischen Eigenschaften, so wird der Sensor vorteilhaft zu Temperaturmessungen verwendet. Liegt dieser Unterschied im Bereich der magnetostriktiven Eigenschaften, so ist der Sensor zu Magnetfeldmessungen besonders geeignet. Ist die Kapillare aus einem Material hergestellt, dessen Ausdehnung sich bei Gasadsorption ändert, so ist der Sensor vorteilhaft zu Gaskonzentrations- und Feuchtemessungen verwendbar. In jedem Fall wird die Meßaufgabe auf eine Längenmessung nach dem Fabry-Perot-Prinzip zurückgeführt.

Eine möglichst geringe Divergenz der optischen Strahlen im Spalt wird auch dadurch erreicht, daß mindestens eine der beiden optischen Fasern an ihrer Stirnfläche mit einem apertureinengenden Faserstück verbunden ist, dessen Länge in der Kapillare wenigstens gleich dem zehnfachen Durchmesser des lichtleitenden Kerns der verwendeten optischen Faser ist, und das die Kapillare rundum ganzflächig berührt. Vorteilhafterweise wird für das apertureinengende Faserstück eine optische Faser ohne optischen Mantel verwendet. Dadurch wird erreicht, daß zu stark divergierende, die Interferenz negativ beeinflussende Lichtstrahlen vor ihrem Eintritt in den Spalt ausgeblendet werden. Das apertureinengende Faserstück kann mit der entsprechenden optischen Faser durch Schweißen oder Kleben verbunden werden. Ebenso kann zwischen der Kapillare und dem apertureinengenden Faserstück eine Schweiß- oder Schrumpfverbindung oder eine Verbindung über eine Immersionsklebung bestehen.

Die Erfindung wird nachstehend anhand der schematischen Zeichnung von sieben Ausführungsbeispielen näher erläutert; alle Ausführungsbeispiele stellen Achsialschnitte dar. Es zeigen:
- Fig. 1: den grundsätzlichen Aufbau eines erfindungsgemäßen faseroptischen Sensors,
- Fig. 2: einen faseroptischen Sensor mit die Apertur einengendem Faserstück,
- Fig. 3: eine Befestigungsmöglichkeit für zwei optische Fasern und eine Kapillare,
- Fig. 4: eine gleitende Lagerung einer optischen Faser in einer Kapillare,
- Fig. 5: einen optischen Sensor mit zwei Spalten,
- Fig. 6: einen optischen Sensor mit einem an einer Membran befestigten Faserstück und
- Fig. 7: einen optischen Sensor mit einer zweigeteilten Kapillare.

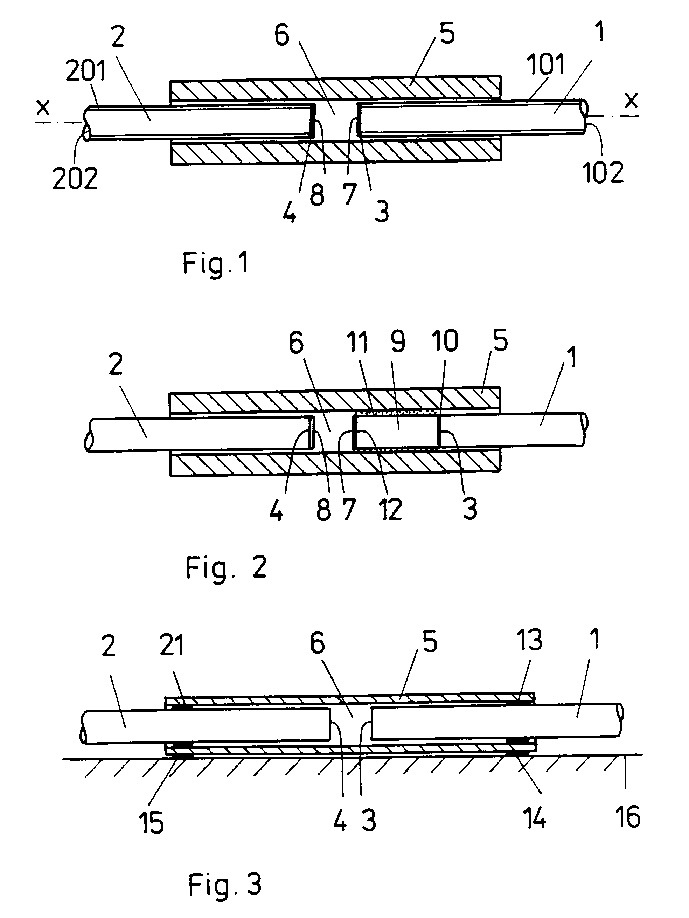

In Fig. 1 sind zwei optische Fasern 1, 2 mit einander zugekehrten Endflächen 3, 4 in einer Kapillare 5 im wesentlichen koaxial zu einer Achse X-X gelagert; die Fasermäntel sind mit 101 und 201 und die Faserkerne mit 102 und 202 bezeichnet. Die Endflächen 3, 4 sind zueinander parallel und bilden einen planparallelen Spalt 6. Der Innendurchmesser der Kapillare 5 ist nur wenig größer als der Außendurchmesser der beiden gleichen Fasern 1, 2, so daß beide Fasern 1, 2 in der Kapillare 5 gleitend verschiebbar sind. Wenigstens eine der beiden Fasern 1, 2 besitzt eine numerische Apertur von etwa 0,1, so daß Licht, welches in der Faser mit der kleinen numerischen Apertur geleitet wird, im Spalt 6 eine hinreichend geringe Divergenz besitzt und auch bei mehrfacher Reflexion zwischen den Endflächen 3, 4, die zugleich Spaltflächen sind, interferenzfähig bleibt. Die Breite des Spaltes 6 beträgt bis zu einigen 10µm. Der Spalt 6 stellt einen optischen Fabry-Perot-Resonator dar. Das im Spalt 6 mehrfach reflektierte Licht kann je nach der optischen Phasendifferenz konstruktiv oder destruktiv interferieren. Die Interferenz erzeugt bei Änderung der optisch wirksamen Breite des Spaltes 6 eine Änderung der reflektierten bzw. transmittierten Lichtintensität. Zwischen den Intensitätsmaxima bzw. Intensitätsminima, der optisch wirksamen Spaltbreite und der Wellenlänge des verwendeten Lichts besteht ein eindeutiger Zusammenhang, der bei bekannter Lichtwellenlänge zur Messung der Spaltbreite benutzt wird. Der Interferenzkontrast, die größe der Intensitätsänderung, wird durch Aufbringen reflektierender Beläge 7, 8 auf die den Spalt begrenzenden Endflächen 3, 4 erhöht. Wesentlich für die Entstehung einer meßtechnisch auswertbaren Interferenz ist, daß beide Endflächen 3, 4 auch bei Änderung der Spaltbreite zueinander parallel bleiben und daß das Licht im Spalt 6 eine hinreichend kleine Divergenz besitzt. Ersteres wird mit Sicherheit gewährleistet, wenn der Innendurchmesser der Kapillare 5 um höchstens 1% größer ist, als der Außendurchmesser der verwendeten optischen Faser 1 bzw. 2. Bei Fasern mit 200µm Außendurchmesser ist z.B. der Kapillareninnendurchmesser 202µm. Ebenso müssen die optischen Fasern 1, 2 über eine Länge von wenigstens dem Zehnfachen des Faserdurchmessers (z.B. 2mm) in der Kapillare geführt werden. Die hinreichend kleine Divergenz wird durch die kleine numerische Apertur von 0,1 gewährleistet. Durch die Wahl der Brechzahldifferenz zwischen dem Kern 102 bzw. 202 und dem Mantel 101 bzw. 201 der entsprechenden optischen Fasern 1, 2 mit Werten von 3,4·10⁻³ wird auch bei dickeren Multimodefasern, z.B. aus Quarzglas, die gewünschte Apertur erreicht.

Beim faseroptischen Sensor gemäß Fig. 1 wird der Resonatorspalt 6 durch die Faser 1 beleuchtet und das Interferenzsignal über die Faser 2 einer nicht dargestellten optoelektronischen Auswertung zugeführt. In gleicher Weise könnte das Interferenzsignal in Reflexion über dieselbe Faser 1 der Auswertung zugeleitet werden. In diesem Fall muß die Reflexionsfläche 4 nicht Endfläche einer Faser sein.

In Fig. 2 sind wieder die optischen Fasern 1 und 2 in der Kapillare 5 gelagert. An die Endfläche 3 der optischen Faser 1 ist ein Faserstück 9 mit Hilfe einer Immersion 10 angeklebt, das eine der Endfläche 4 der optischen Faser 2 benachbarte Endfläche 12 besitzt. Für das apertureinengende Faserstück 9 wird eine optische Faser ohne optischen Mantel verwendet. Eine optische Immersion 11 zwischen dem Faserstück 9 und der Wandung der Kapillare 5 sorgt für einen hinreichend guten optischen Kontakt zwischen beiden Teilen, so daß Lichtstrahlen mit größerer Apertur ausgeblendet werden. Die reflexionsfördernden Beläge 7, 8 tragen zur Kontrasterhöhung des Interferenzbildes bei. Die Länge des Faserstücks 9 soll mitdestens das Zehnfache seines Durchmessers betragen, um die apertureinengende Wirkung zu erzielen. Anstelle der Immersionsverbindungen 10, 11 können auch Schweißverbindungen oder Aufschrumpfungen verwendet werden.

In Fig. 3 sind die optischen Fasern 1, 2 mit ihren Endflächen 3, 4 zur Bildung des Spaltes 6 wieder in der Kapillare 5 angeordnet. Die optischen Fasern 1, 2 sind an definierten Stellen 13, 21 mit der Kapillare 5 fest verbunden. Die Kapillare 5 ist an definierten Stellen 14, 15 in der Nähe ihrer Enden mit einem Meßobjekt 16 starr verbunden. Die definierten Stellen 13 und 14 sowie 21 und 15 sind einander zugeordnet. Infolge der punktförmigen Fixierung der optischen Fasern 1, 2 in der Kapillare 5 wird bei Dehnung des Meßobjekts 16 zwischen den Fixierungen 14 und 15 der Spalt 6 um den Wert der Dehnung vergrößert, es kommt zu einer Beeinflussung der optischen Interferenz, die mit Hilfe nicht dargestellter Auswertemittel festgestellt und aus der die Dehnung bestimmt werden kann. Die Kapillare 5 ist vorteilhafterweise aus dem gleichen Material hergestellt wie die optischen Fasern 1, 2, um den Einfluß der thermischen Ausdehnung dieser Bauteile bei der Messung zu verringern. In einem Beispiel für Dehnungsmessungen besitzt der Sensor folgende Abmessungen:

| | |
|---|---|
| Faseraußendurchmesser | 200µm, |
| Kapillareninnendurchmesser | 202µm, |
| Kapillarenaußendurchmesser | 300µm, |
| Abstand zwischen den definierten Stellen 14 und 21 bzw. 14 und 15 | 15mm, |
| Spaltbreite ca. | 10µm. |

Eine Dehnung des Meßobjekts 16 um den 10⁻⁶-fachen Teil der Entfernung von 15mm zwischen den Fixierpunkten 14 und 15 ergibt eine Spaltbreitenäderung von ca. 15nm, die anhand der Änderung des Interferenzsignals aus dem Fabry-Perot-Interferometer ohne weiteres detektierbar ist.

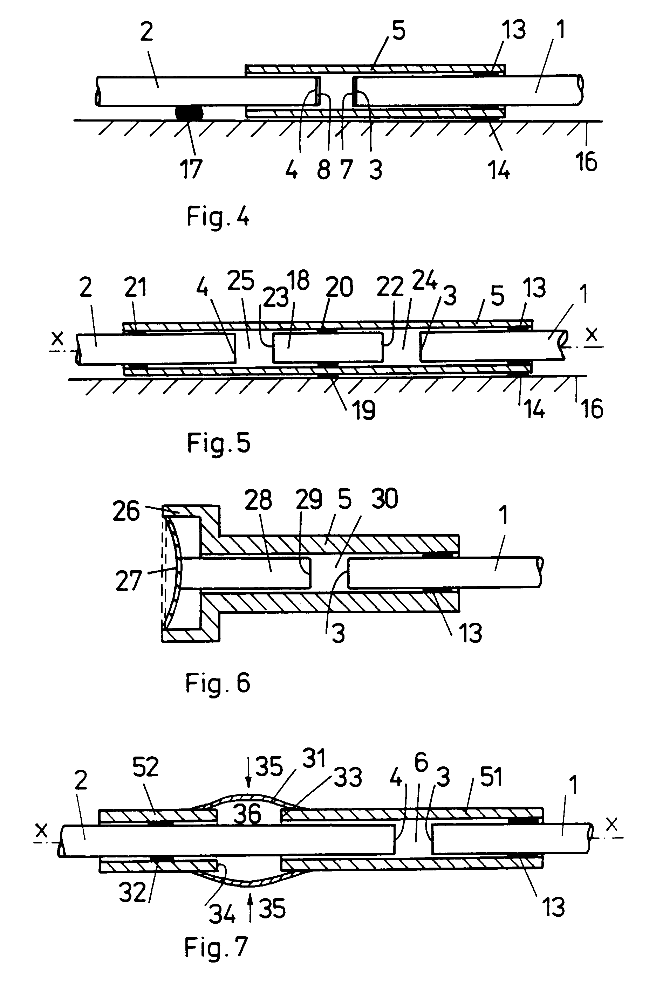

In Fig. 4 sind die optischen Fasern 1, 2 mit den einander zugekehrten Endflächen 3, 4 und deren reflexfördernden Belägen 7, 8 wieder in der Kapillare 5 gelagert. Die Kapillare 5 ist an der definierten Stelle 14 mit dem Meßobjekt 16 fest verbunden. Ebenso ist in der Nähe der definierten Stelle 14 die optische Faser 1 mit der Kapillare an der definierten Stelle 13 starr verbunden. Die optische Faser 2 befindet sich in fester Verbindung mit dem Meßobjekt 16 an der definierten Stelle 17 und gleitet in der Kapillare 5, so daß sich bei Dehnungen bzw. Schrumpfungen des Meßobjektes 16 der Abstand zwischen den beiden Endflächen 3 und 4 verändert. Bei diesem faseroptischen Sensor haben die Dehnungseigenschaften der Kapillare 5 keinen Einfluß auf das Meßergebnis.

Der in Fig. 5 dargestellte faseroptische Sensor besitzt die Kapillare 5, in der die Enden der optischen Fasern 1 und 2 mit den Endflächen 3 und 4 sowie zwischen ihnen ein Faserstück 18 mit den Enflächen 22 und 23 angeordnet sind. Zwischen den Endflächen 3 und 22 einerseits sowie 4 und 23 andererseits befinden sich Spalte 24 und 25, die als Fabry-Perot-Interferometer dienen. Sowohl die Kapillare 5 als auch die optischen Fasern 1, 2 und das Faserstück 18 sind koaxial zur Achse X-X angeordnet. Der Innendurchmesser der Kapillare 5 ist um etwa 2µm größer als der Außendurchmesser (200µm) der optischen Fasern 1, 2 bzw. des Faserstücks 18. Definierte Befestigungsstellen der Kapillare 5 am Meßobjekt 16 befinden sich bei 14 und 19. Über der definierten Befestigungsstelle 14 an einem Ende der Kapillare 5 liegt die definierte Befestigungsstelle 13 der optischen Faser 1 mit der Kapillare 5. über der definierten Befestigungsstelle 19 in der halben Länge der Kapillare 5 zwischen den Befestigungsstellen 13 und 21 ist die definierte Befestigungsstelle 20 in der Mitte des Faserstücks 18 angeordnet. Am anderen Ende der Kapillare 5 befindet sich die definierte Befestigungsstelle 21 der optischen Faser 2. Im vorliegenden Beispiel wird Licht einer nicht dargestellten Lichtquelle durch die optische Faser 1 zum Spalt 24 geleitet, dort mehrfach reflektiert und das reflektierte Interferenzsignal durch die Faser 1 zu einem nicht dargestellten Empfänger geleitet. In gleicher Weise wird von einer nicht dargestellten Lichtquelle durch die Faser 2 Licht zum Spalt 25 geleitet und nach mehrfacher Reflexion im Spalt 25 das reflektierte Interferenzsignal in die Faser 2 und zu einem nicht dargestellten Empfänger reflektiert. Während der Spalt 24 zu Dehnungsmessungen zwischen den Verbindungsstellen 14 und 19 des Meßobjektes 16 dient, wird der Spalt 25 zur Bestimmung der Temperatur benutzt. Hierfür wird die thermisch bedingte Längenänderung der Kapillare 5 zwischen den Befestigungsstellen 20 und 21 verwendet. Mit dem faseroptischen Sensor gemäß Fig. 5 können also zwei Meßgrößen unabhängig voneinander bestimmt werden. Die zusätzliche Temperaturmessung ist dann notwendig, wenn die Kapillare 5 z.B. aus Elastizitätsgründen, aus einem Material besteht, dessen thermische Ausdehnung von der der optischen Fasern 1, 2 abweicht, oder wenn aus anderen Gründen neben der Dehnung die Temperatur gemessen werden soll.

In Fig. 6 ist eine Kapillare 5 einseitig mit einer zylindrischen Erweiterung 26 versehen, die von einer Membran 27 verschlossen wird. Mit der Membran 27 ist ein Faserstück 28 so verbunden, daß es über den größeren Teil seiner Länge im engeren Teil der Kapillare gleitet. Vom anderen Ende der Kapillare 5 her ist eine optische Faser 1 derart in die Kapillare eingeführt, daß sich zwischen ihrer Endfläche 3 und der Endfläche 29 des Faserstücks 28 in jedem Fall ein planparalleler Spalt 30 nach Art eines Fabry-Perot-Resonators ausbildet. In der Nähe des Einführungsendes der optischen Faser 1 ist diese mit der Kapillare 5 an der definierten Stelle 13 verbunden. Der in Fig. 6 dargestellte faseroptische Sensor dient der Druckmessung. Dabei leitet die optische Faser 1 Licht einer nicht dargestellten Lichtquelle zum Spalt 30 und von diesem nach mehrfacher Reflexion zu einem nicht dargestellten Empfänger. Bei Druck- oder Krafteinwirkung auf die Membran 27 wird diese mehr oder weniger verformt, so daß das Faserstück 28 sich in der Kapillare 5 bewegt und die Breite des Spaltes 30 interferometrisch meßbar verändert wird. Auf diese Weise sind Membrandurchbiegungen von wenigen nm meßbar.

Anstelle der zylindrischen Erweiterung 26 kann die Kapillare 5 innerhalb ihres Außendurchmessers einseitig auch eine Erweiterung des Innenraums besitzen, die durch eine Membran, deren den Innenraum begrenzende Fläche lichtreflektierende Eigenschaften hat, verschlossen ist. In einem geringen Abstand von der Membran kann die Endfläche einer im übrigen in die Kapillare 5 eingekitteten optischen Faser angeordnet sein. Bei Ausbiegung der Membran vergrößert oder verkleinert sich deren Abstand von der Endfläche der optischen Faser. Auch diese Abstandsänderung ist im reflektierten Licht interferometrisch meßbar.

In Fig. 7 ist eine zweigeteilte Kapillare vorgesehen, deren Teile 51 und 52 an ihren einander zugekehrten Enden 33 und 34 über eine ringförmige Membran 31 miteinander verbunden sind. An seinem freien Ende ist in den Kapillarteil 51 die optische Faser 1 eingeführt und an der definierten Stelle 13 mit dem Kapillarteil 51 starr verbunden. Durch den Kapillarteil 52 ist die optische Faser 2 so hindurchgeführt, daß sie in den Kapillarteil 51 gleitend hineinragt. Die optische Faser 2 ist mit dem Kapillarteil 52 an einer definierten Stelle 32 fest verbunden. Zwischen den Enden 33 und 34 der Kapillarteile 51 und 52 und der Ringmembran 31 umgibt die optische Faser 2 einen Druckraum 36, der unter der Einwirkung eines von außen wirkenden Drucks 35 parallel zur Achse X-X vergrößert oder verkleinert wird. Da die optische Faser 2 mit dem Kapillarteil 52 an der Stelle 32 verbunden ist, verändert sich bei Verkleinerung oder Vergrößerung des Abstandes zwischen den Enden 33 und 34 entsprechend der Spalt 6 zwischen den Endflächen 3 und 4 der optischen Fasern 1 und 2. Diese Veränderung ist interferometrisch erfaßbar sowohl bei transmittierten als auch bei reflektiertem Licht. Das Meßlicht kann also über eine der optischen Fasern 1 oder 2 zugeleitet und nach Passieren des Resonatorspaltes 6 durch die gleiche Faser 1 zurück oder durch die andere Faser 2 weitergeleitet werden.

Es liegt im Rahmen der Erfindung,daß die druckbedingte Durchbiegung der Membran 27 bzw. 31 und deren übertragung auf eine von zwei Faserendflächen 3 und 29 bzw. 3 und 4 begrenzten Spalt 30 bzw. 6 durch thermische Volumenänderung einer Gas- oder Flüssigkeitsfüllung hervorgerufen wird, so daß eine solche Anordnung als Gas- oder Flüssigkeitsthermometer verwendbar ist. Weiterhin kann die Druckänderung auf Osmose beruhen. In diesem Fall ist die Membran 27 bzw. 31 halbdurchlässig ausgebildet.
/1/ W. H. Quick et al: Fiber optics sensing techniques, Proceedings of the First International Conference on Optical Fibre Sensors, London 1983, pp. 6-9
/2/ E. R. Cox et all: Fibre optic color sensors based on Fabry-Perot-Interferometry, Proceedings of the First International Conference on Optical Fibre Sensors, London 1983, pp. 122-126
/3/ E. W. Saaski et al: A family of fiber optic sensors using cavity resonator microshifts, Proceedings of the 4th International Conference on Optical Fibre Sensors, Tokyo 1986, pp. 11-14
/4/ Tuan A. Tran et al: Stabilized extrinsic fiber optic Fabry-Perot-Sensor for service acoustic wave detection, SPIE Vol. 1584, Fiber Optic and Laser Sensors IX (1991), pp 178-186

### Bezugszeichenliste

- 1, 2 -: optische Fasern
- 3, 4, 12, 22, 23, 29-: Endflächen
- 5 -: Kapillare
- 6, 24, 25, 30 -: Spalte
- 7, 8 -: reflektierende Beläge
- 9, 18, 28 -: Faserstücke
- 10, 11 -: Immersionsverbindungen
- 13, 14, 15, 17, 19, 20, 21, 32 -: definierte Stellen
- 16 -: Meßobjekt
- 26 -: zylindrische Erweiterung
- 27, 31 -: Membran
- 33, 34 -: einander zugekehrte Enden
- 35 -: Druck
- 36 -: Druckraum
- 51, 52 -: Kapillarteile
- 101, 201 -: Fasermäntel
- 102, 202 -: Faserkerne
- X-X -: Achse

## Patentansprüche

1. Faseroptischer Sensor nach dem Fabry-Perot-Prinzip mit einer offenen Kapillare (5), in die mindestens eine optische Faser (1) so eingeführt ist, daß ihre eingeführte Endfläche (3) mit einer optisch reflektierenden Fläche (4) einen planparallelen, zur Faserachse im wesentlichen rechtwinklig gerichteten Spalt (6) bildet, dadurch gekennzeichnet, daß die optische Faser (1) als Multimodefaser ausgebildet ist und eine numerische Apertur aufweist, die kleiner als 0,2 ist.

2. Faseroptischer Sensor gemäß Anspruch 1., dadurch gekennzeichnet, daß die optisch reflektierende Fläche eine Endfläche (4) einer zweiten Multimodefaser (2) ist.

3. Faseroptischer Sensor gemäß Anspruch 2., dadurch gekennzeichnet, daß die relative Brechzahldifferenz Δ der einen der beiden optischen Fasern Δ=(n_{K}-n_{M})/n_{K} ungefähr gleich oder kleiner als 2,4 · 10⁻³ ist, wobei n_{K} die Brechzahl des Faserkerns (102, 202) und n_{M} die Brechzahl des Fasermantels (101, 201) ist.

4. Faseroptischer Sensor gemäß Anspruch 3., dadurch gekennzeichnet, daß die eine der optischen Fasern (1) mit der Kapillare (5) an einer definierten Stelle (13) fest verbunden ist.

5. Faseroptischer Sensor gemäß Anspruch 3., dadurch gekennzeichnet, daß jede der beiden optischen Fasern (1, 2) mit der Kapillare (5) an einer definierten Stelle (13, 21) fest verbunden ist.

6. Faseroptischer Sensor gemäß mindestens einem der Ansprüche 1. bis 5., dadurch gekennzeichnet, daß zwischen den Endflächen (3, 4) der beiden optischen Fasern (1, 2) mindestens ein optisches Faserstück (18) angeordnet ist, dessen Endfläche (22, 23) mit den Endflächen (3, 4) der optischen Fasern (1, 2) planparallele, zur gemeinsamen Faserachse (X-X) rechtwinklig gerichtete Spalte (24, 25) bilden.

7. Faseroptischer Sensor gemäß Anspruch 6., dadurch gekennzeichnet, daß das Faserstück (18) an einer definierten Stelle (20) mit der Kapillare (5) in Verbindung steht.

8. Faseroptischer Sensor gemäß Anspruch 4., dadurch gekennzeichnet, daß die Kapillare (5) an der gleichen definierten Stelle (14) mit einem Meßobjekt (16) fest verbunden ist, an der die eine optische Faser (1) mit der Kapillare (5) fest verbunden ist, und daß die andere optische Faser (2) in der Kapillare (5) gleitend gelagert und mit dem Meßobjekt (16) an einer definierten Stelle (17) fest verbunden ist.

9. Faseroptischer Sensor gemäß Anspruch 5., dadurch gekennzeichnet, daß die Kapillare (5) an den gleichen definierten Stellen (14, 15) mit dem Meßobjekt (16) fest verbunden ist, an denen die optischen Fasern (1, 2) mit der Kapillare (5) verbunden sind.

10. Faseroptischer Sensor gemäß Anspruch 6. und 7., dadurch gekennzeichnet, daß die Kapillare (5) an den gleichen definierten Stellen (14, 19) mit dem Meßobjekt (16) in Verbindung steht an denen die eine der optischen Fasern (1) und das Faserstück (18) mit der Kapillare (5) fest verbunden sind.

11. Faseroptischer Sensor gemäß Anspruch 4., dadurch gekennzeichnet, daß die Kapillare (5) an einem Ende eine Aufweitung (26) aufweist und durch eine Membran (27) verschlossen ist, daß mit der Membran (27) ein Faserstück (28) fest verbunden ist, das in der Kapillare (5) gleitend gelagert ist, und daß am anderen Ende eine optische Faser (1) in die Kapillare (5) hineiragend mit der Kapillare (5) fest verbunden ist.

12. Faseroptischer Sensor gemäß Anspruch 5., dadurch gekennzeichnet, daß die Kapillare (5) quer zur Faserachse (X-X) geteilt ist und daß beide Kapillarteile (51, 52) durch eine Ringmembran (31) miteinander verbunden sind, daß die eine der beiden optischen Fasern (1) an einer definierten Stelle (13) mit dem äußeren Ende des einen Kapillarteils (51) fest verbunden ist und daß die andere der beiden optischen Fasern (2) an einer definierten Stelle (32) mit dem anderen Kapillarteil (52) fest verbunden ist und durch den Druckraum (36) unter der Ringmembran (31) in den einen Kapillarteil (51) hineinragt.

13. Faseroptischer Sensor gemäß mindestens einem der vorstehenden Ansprüche, dadurch gekennzeichnet, daß mindestens einer der Spalte (6, 24, 25, 30) mit einer Immersion gefüllt ist, deren Brechzahl sich temperaturabhängig ändert.

14. Faseroptischer Sensor gemäß mindestens einem der Ansprüche 1. bis 12, dadurch gekennzeichnet, daß mindestens einer der Spalte (6, 24, 25, 30) mit einer Immersion gefüllt ist deren Absorption sich temperturabhängig ändert.

15. Faseroptischer Sensor gemäß mindestens einem der vorstehenden Ansprüche, dadurch gekennzeichnet, daß die Fasern (1, 2) aus demselben Material, vorzugsweise Quarzglas, bestehen wie die Kapillare (5).

16. Faseroptischer Sensor gemäß mindestens einem der Ansprüche 1. bis 14., dadurch gekennzeichnet, daß die Fasern (1, 2) und die Kapillare (5) aus unterschiedlichen Materialien bestehen.

17. Faseroptischer Sensor gemäß mindestens einem der vorstehenden Ansprüche, dadurch gekennzeichnet, daß die Endflächen (3, 4 bzw. 12 bzw. 22, 23) der Fasern (1, 2) und/oder der Faserstücke (9, 18) mit reflexfördernden Belaägen (7, 8) versehen sind.

18. Faseroptischer Sensor gemäß mindestens einem der vorstehenden Ansprüche, dadurch gekennzeichnet, daß mindestens eine der beiden optischen Fasern (1, 2) an ihrer Stirnfläche (3) mit einem apertureinengendem Faserstück (9) verbunden ist, dessen Länge in der Kapillare (5) etwa gleich dem Zehnfachen Kapillarendurchmesser ist und das die Kapillare (5) rundum ganzflächig berührt.

19. Faseroptischer Sensor gemäß Anspruch 18. , dadurch gekennzeichnet, daß zwischen dem apertureinengendem Faserstück (9) und der entsprechenden optischen Faser (1) eine Schweiß- oder Klebeverbindung besteht.

20. Faseroptischer Sensor gemäß Anspruch 18. oder 19. , dadurch gekennzeichnet, daß zwischen der Kapillare (5) und dem apertureinengendem Faserstück (9) eine Schweiß-, Schrumpf- oder Immersionsverbindung vorgesehen ist.

## Claims

1. A fibre optic sensor based on the Fabry-Perot principle comprising an open capillary tube (5) into which at least one optic fibre (1) is inserted in such a manner that the inserted leading face (3) of said fibre (1) constitutes in cooperation with an optic reflecting face a plane parallel gap (6) substantially at right angles to a fibre axis, characterized in that said optic fibre (1) is embodied as a multimode fibre exhibiting a numerical aperture of lower 0.2.

2. A fibre optic sensor as claimed in claim 1, wherein said optic reflecting face is a leading face (4) of a second multimode fibre (2).

3. A fibre optic sensor as claimed in claim 2, wherein the relative refractive index difference Δ of one of the two optic fibres Δ =(n_{K} - n_{M})/n_{K} is substantially equal or lower than 2.4·10⁻³, where n_{K} is the refractive index of the fibre core (102, 202) and n_{M} the refractive index of the fibre cladding (101, 201).

4. A fibre optic sensor as claimed in claim 3, wherein said one of the optic fibres (1) is non-displaceably connected to said capillary tube (5) at a definite place (13).

5. A fibre optic sensor as claimed in claim 3, wherein each of said two optic fibres (1, 2) is non-displaceably connected to said capillary tube (5) at a definite place (13, 21).

6. A fibre optic sensor as claimed in at least one of the claims 1 to 5, wherein between the leading faces (3, 4) of the two optic fibres (1, 2) at least one optic fibre portion (18) is arranged, the end faces (22, 23) of which constitute in cooperation with the respective leading faces (3, 4) of the optic fibres (1, 2) plane parallel gaps (24, 25) at right angles to the common fibre axis X-X.

7. A fibre optic sensor as claimed in claim 6, wherein said fibre portion (18) is connected to said capillary tube (5) at a definite place (20).

8. A fibre optic sensor as claimed in claim 4, wherein said capillary tube (5) is non-displaceably connected to a measuring object (16) at the same definite place (14) where said one optic fibre (1) is non-displaceably connected to said capillary tube (5), and wherein the other optic fibre (2), slidingly seated in said capillary tube (5), is non-displaceably connected to said measuring object (16) at a definite place (17).

9. A fibre optic sensor as claimed in claim 5, wherein said capillary tube (5) is non-displaceably connected to said measuring object (16) at those definite places (14, 15) where the optic fibres (1, 2) are connected to said capillary tube (5).

10. A fibre optic sensor as claimed in claims 6 and 7, wherein said capillary tube (5) is connected to said measuring object (16) via the same definite places (14, 19) via which said one optic fibre (1) and said fibre portion (18) are non-displaceably connected to said capillary tube (5).

11. A fibre optic sensor as claimed in claim 4, wherein said capillary tube (5) is provided with a bulge (26) on one end portion which is sealed by a diaphragm (27), said diaphragm (27) being non-displaceably connected to a fibre portion (28) which, in turn, is slidingly seated in said capillary tube (5), and wherein at the other end portion an optic fibre (1), projecting into said capillary tube (5), is non-displaceably connected to said capillary tube (5).

12. A fibre optic sensor as claimed in claim 5, wherein said capillary tube (5) is split transversally to the fibre axis (X-X), and wherein the resulting two capillary tube portions (51, 52) are connected with one another via an annular diaphragm (31), and wherein said one of the two optic fibres (1) is non-displaceably connected to the remote end of the one capillary tube portion (51) at a definite place (13), and wherein the other of the two optic fibres (2) is non-displaceably connected to the other capillary tube portion (52) and projects into the one capillary tube portion (51) passing a pressure chamber (36) constituted under the annular diaphragm (31).

13. A fibre optic sensor as claimed in at least one of the preceding claims, wherein at least one of the gaps (6, 24, 25, 30) is filled with an immersion the refractive index of which varies as a function of temperature.

14. A fibre optic sensor as claimed in at least one of the preceding claims 1 to 12, wherein at least one of the gaps (6, 24, 25, 30) is filled with an immersion the absorption of which varies as a function of temperature.

15. A fibre optic sensor as claimed in at least one of the preceding claims, wherein the fibres (1, 2) are made of the same material as the capillary tube (5), preferably quartz glass.

16. A fibre optic sensor as claimed in at least one of the preceding claims 1 to 14, wherein the fibres (1, 2) and the capillary tube (5) are made of different materials.

17. A fibre optic sensor as claimed in at least one of the preceding claims, wherein the end faces (3, 4 and 12, respectively, and 22, 23, respectively) of the fibres (1, 2) and/or of the fibre portions (9, 18) are provided with reflecting coats (7, 8).

18. A fibre optic sensor as claimed in at least one of the preceding claims, wherein at least one of the two optic fibres (1, 2) is connected at its leading face (3) to an aperture narrowing fibre portion (9), the length of which in the capillary tube (5) equals the tenfold diameter of the capillary tube (5) and contacts the latter around its entire surface.

19. A fibre optic sensor as claimed in claim 18, wherein a welding or gluing connection is provided between the aperture narrowing fibre portion (9) and the respective optic fibre (1).

20. A fibre optic sensor as claimed in claims 18 or 19, wherein a welding, shrinking, or immersion connection is provided between the capillary tube (5) and the aperture narrowing fibre portion (9).

## Revendications

1. Capteur à fibre optique fonctionnant selon le principe de Fabry-Perot, comportant un capillaire ouvert (5), capillaire dans lequel au moins une fibre optique (1) est introduite de telle manière à ce que la face d'extrémité introduite (3) de cette fibre optique forme une fente plan-parallèle (6) avec une surface optique réfléchissante, la fente (6) formant un angle essentiellement droit par rapport à l'axe de la fibre, caractérisé en ce que la fibre optique (1) est conçue comme fibre multimodale et possède une ouverture numérique qui est inférieure à 0,2.

2. Capteur à fibre optique selon la revendication 1, caractérisé en ce que la surface optique réfléchissante est une face d'extrémité (4) d'une deuxième fibre multimodale (2).

3. Capteur à fibre optique selon la revendication 2, caractérisé en ce que la différence relative d'indice de réfraction Δ de l'une des deux fibres optiques Δ = (n_{K}-n_{M})/n_{K} est approximativement égale ou inférieure à 2,4 · 10⁻³, n_{K} étant l'indice de réfraction du coeur de fibre (102, 202) et n_{M} étant l'indice de réfraction de la gaine de fibre (102, 201).

4. Capteur à fibre optique selon la revendication 3, caractérisé en ce que l'une des fibres optiques (1) est liée de façon fixe au capillaire (5) en un point défini (13).

5. Capteur à fibre optique selon la revendication 3, caractérisé en ce que chacune des deux fibres optiques (1, 2) est liée de façon fixe au capillaire (5) en un point défini (13, 21).

6. Capteur à fibre optique selon au moins une des revendications 1 à 5, caractérisé en ce qu'au moins un élément de fibre optique (18) est aménagé entre les faces d'extrémité (3, 4) des deux fibres optiques (1, 2), élément de fibre optique (18) dont les faces d'extrémité (22, 23) forment des fentes (24, 25) plan-parallèles avec les faces d'extrémité (3, 4) des fibres optiques (1, 2) et dirigées de façon orthogonale par rapport à l'axe commun des fibres (X-X).

7. Capteur à fibre optique selon la revendication 6, caractérisé en ce que l'élément de fibre (18) est en liaison avec le capillaire (5) en un point défini (20).

8. Capteur à fibre optique selon la revendication 4, caractérisé en ce que ie capillaire (5) est lié de façon fixe à un objet de mesure (16) au même point défini (14), auquel point défini l'une des fibres optiques (1) est liée de façon fixe au capillaire (5) et en ce que l'autre fibre optique (2) est logée de façon glissante à l'intérieur du capillaire (5) et liée de façon fixe à l'objet de mesure (16) en un point défini (17).

9. Capteur à fibre optique selon la revendication 5, caractérisé en ce que le capillaire (5) est lié de façon fixe à l'objet de mesure (16) aux mêmes points définis (14, 15), auquels points définis les fibres optiques (1, 2) sont liées au capillaire (5).

10. Capteur à fibre optique selon les revendications 6 et 7, caractérisé en ce que le capillaire (5) est lié à l'objet de mesure (16) aux mêmes points définis (14, 19), auquels points définis l'une des fibres optiques (1) et l'élément de fibre (18) sont liés de façon fixe au capillaire (5).

11. Capteur à fibre optique selon la revendication 4, caractérisé en ce que le capillaire (5) présente un élargissement (26) aménagé à une extrémité et fermé par une membrane (27), en ce qu'un élément de fibre (28) est lié de façon fixe à la membrane (27) et logé de façon glissante à l'intérieur du capillaire (5) et en ce qu'une fibre optique (1), s'étendant à l'intérieur du capillaire (5), est liée de façon fixe au capillaire (5) à l'autre extrémité.

12. Capteur à fibre optique selon la revendication 5, caractérisé en ce que le capillaire (5) est séparé de façon transversale par rapport à l'axe de fibre (X-X) et en ce que les deux éléments capillaires (51, 52) sont liés l'un à l'autre par une membrane annulaire (31), en ce que l'une des deux fibres optiques (1) est liée de façon fixe à l'extrémité extérieure de l'un des éléments capillaires (51) en un point défini (13) et en ce que l'autre des deux fibres optiques (2) est liée de façon fixe à l'autre élément capillaire (52) en un point défini (32) et s'étend à l'intérieur de l'un des éléments capillaires (51) à travers l'espace sous pression (36) sous la membrane annulaire (31).

13. Capteur à fibre optique selon au moins une des revendications susmentionnées, caractérisé en ce qu'au moins une des fentes (6, 24, 25, 30) est remplie d'une immersion dont l'indice de réfraction change en fonction de la température.

14. Capteur à fibre optique selon au moins une des revendications 1 à 12, caractérisé en ce qu'au moins une des fentes (6, 24, 25, 30) est remplie d'une immersion dont l'absorption change en fonction de la température.

15. Capteur à fibre optique selon au moins une des revendications susmentionnées, caractérisé en ce que les fibres (1, 2) consistent dans le même matériau que le capillaire (5) et, de préférence, en verre quartzeux.

16. Capteur à fibre optique selon au moins une des revendications 1 à 14, caractérisé en ce que les fibres (1, 2) et le capillaire (5) consistent en des matériaux différents.

17. Capteur à fibre optique selon au moins une des revendications susmentionnées, caractérisé en ce que les faces d'extrémité (3, 4 et, respectivement, 12 et, respectivement 22, 23) des fibres (1, 2) et/ou des éléments de fibre (9, 18) sont pourvues de revêtements (7, 8) encourageant la réflexion.

18. Capteur à fibre optique selon au moins une des revendications susmentionnées, caractérisé en ce qu'au moins une des deux fibres optiques (1, 2) est liée à un élément de fibre (9) réduisant l'ouverture et étant situé à sa face frontale (3), élément de fibre (9) dont la longueur à l'intérieur du capillaire (5) est approximativement égale au diamètre du capillaire multiplié par dix et élément de fibre (9) qui touche le capillaire sur tout le pourtour et sur toute la surface.

19. Capteur à fibre optique selon la revendication 18, caractérisé en ce qu'un joint soudé ou collé existe entre l'élément de fibre (9) réduisant l'ouverture et la fibre optique (1) correspondante.

20. Capteur à fibre optique selon la revendication 18 ou 19, caractérisé en ce qu'un joint soudé, serré ou établi par immersion est prévu entre le capillaire (5) et l'élément de fibre (9) réduisant l'ouverture.
